# EUROPÄISCHE PATENTSCHRIFT

(11) **EP 4 551 014 B1**
(45) Veröffentlichungstag und Bekanntmachung des Hinweises auf die Patenterteilung: **25.02.2026**
(21) Anmeldenummer: 23744355.1
(22) Anmeldetag: 06.07.2023
(51) Int. Cl.: A01M 7/00

(54) **SYSTEM ZUR SCHÄDLINGSBEKÄMPFUNG AN PFLANZEN**
SYSTEM FOR CONTROLLING PESTS ON PLANTS
SYSTÈME DE LUTTE CONTRE LES NUISIBLES SUR DES PLANTES

(30) Priorität: 08.07.2022 CH 8152022
(43) Veröffentlichungstag der Anmeldung: 14.05.2025
(73) Patentinhaber: Chemspeed Research AG, 4410 Liestal (CH)
(72) Erfinder: GUELLER, Rolf, 5027 Herznach (CH)
(74) Vertreter: Bohest AG
(86) Internationale Anmeldenummer: PCT/CH2023/050024
(87) Internationale Veröffentlichungsnummer: WO 2024/007088

(56) Entgegenhaltungen:
- DE-A1- 102018 128 002
- DE-A1- 102019 127 125
- US-A1- 2016 318 607
- US-A1- 2019 031 346
- US-A1- 2021 146 388
- US-A1- 2022 117 218

## Beschreibung

Die vorliegende Erfindung betrifft ein System zur Schädlingsbekämpfung gemäss dem Oberbegriff des unabhängigen Patentanspruchs 1.

Um die nachhaltige Erzeugung von landwirtschaftlichen Produkten zu gewährleisten, ist ein umfassender Schutz der Nutzpflanzen vor diversen Schädlingen unabdingbar und wird mit dem ständig wachsenden Bedarf an landwirtschaftlichen Produkten für die ganze Menschheit immer wichtiger. Aus Gründen des Umweltschutzes geht dabei der Trend weg von chemischen Pflanzenschutzmitteln hin zur Schädlingsbekämpfung mit physikalischen Mitteln.

In einem in MIT Technology Review am 20. Juli 2016 erschienenen Artikel «Six Ways Drones Are Revolutionizing Agriculture» von Michal Mazur ist der mögliche Einsatz von Drohnen für landwirtschaftliche Arbeiten beschrieben. Es wird erwähnt, dass mit geeigneten Sensoren und Geräten ausgestattete Drohnen z.B. für die Boden/Feld-Überwachung, die Bepflanzung, die Beurteilung des Ernteertrags, die Bewässerung, die Beurteilung der Pflanzengesundheit etc. eingesetzt werden könnten. Ebenfalls erwähnt ist die Schädlingsbekämpfung in Kulturen, wobei mittels der Drohnen Pflanzen gezielt mit Chemikalien besprüht werden. Drohnen können auch für verschiedene Aufgaben ausgebildet sein und es könne auch ein Schwarm von Drohnen zum Einsatz kommen.

In einem auf Knowablemagazin.org am 10. November 2018 erschienenen Artikel «Eyes in the sky: 5 ways drones will change agriculture» von Rachel Ehrenberg ist der mögliche zukünftige Einsatz von Drohnen für landwirtschaftliche Arbeiten beschrieben. Es wird erwähnt, dass mit geeigneten Sensoren ausgestattete Drohnen z.B. zum Erkennen des Reifezustands von Weintrauben in Rebbergen, zum Erkennen von unerwünschten Pflanzen in Anbauflächen, zum Erkennen von Bewässerungsbedarf, zum Erkennen von kranken Pflanzen oder schwebenden pathogenen Keimen, aber z.B. auch zum Zählen von Vieh oder zur künstlichen Bestäubung von Blüten eingesetzt werden könnten. Konkrete Ausbildungen von mit Drohnen ausgestatteten Systemen sind nicht beschrieben.

In der EP 3 500 877 B1 ist ein System zum Ernten von Früchten beschrieben, wobei eine mit einer Kamera ausgestattete Drohne innerhalb eines Arbeitsgebiets erntereife Früchte erkennt und pflückt. Auch der Einsatz von mehreren Drohnen ist erwähnt.

In einem auf dem News Portal phi der Produktionstechnik Hannover erschienenen Artikel «Licht statt Chemie» ist ein prinzipielles Konzept eines Systems zur Unkrautbekämpfung in Kulturpflanzenfeldern beschrieben, welches Unkraut anstatt durch chemische Behandlung durch Laserbestrahlung zumindest soweit teilvernichtet, dass es der Entwicklung der Kulturpflanzen nicht mehr schaden kann. Es ist erwähnt, dass zur Unterscheidung zwischen Kulturpflanzen und Unkraut Methoden der elektronischen Bilderkennung herangezogen werden könnten. Als Ausblick ist ferner erwähnt, dass Laser z.B. auch zur Schädlingsbekämpfung in der Pflanzenzucht eingesetzt werden können.

In der US 2019/0031346 A1 ist ein System zur Schädlingsbekämpfung an in einer landwirtschaftlichen Fläche befindlichen Pflanzen mittels Drohnen offenbart, bei dem die Schädlingsbekämpfung durch Sprühen von Pestiziden erfolgt.

Der vorliegenden Erfindung liegt die Aufgabe zugrunde, ein Schädlingsbekämpfungssystem der gattungsgemässen Art dahingehend zu verbessern, dass es in der Lage ist, die Bekämpfung von Schädlingen ohne menschliche Interaktion und ohne Einsatz von Pestiziden durchzuführen. Das System soll dabei in beliebigen landwirtschaftlichen Flächen, insbesondere auch Mischkulturen, einsetzbar sein.

Diese Aufgabe wird durch das erfindungsgemässe System zur Schädlingsbekämpfung gelöst, wie es im unabhängigen Patentanspruch 1 definiert ist. Vorteilhafte Ausführungsvarianten ergeben sich aus den abhängigen Patentansprüchen.

Schädlingsbekämpfung umfasst im Rahmen der vorliegenden Erfindung die Bekämpfung von Schadorganismen an Pflanzen und von durch diese verursachten Krankheitsbildern sowie die Bekämpfung von Frass-Schädlingen. Dementsprechend sind Schädlinge als Schadorganismen oder Frass-Schädlinge zu verstehen.

Das Wesen der Erfindung besteht in Folgendem: Ein System zur Schädlingsbekämpfung an in einer landwirtschaftlichen Fläche befindlichen Pflanzen umfasst einen Schwarm von Drohnen und eine Steuerungsvorrichtung zur Steuerung der Drohnen. Die Steuerungsvorrichtung und die Drohnen sind mit Kommunikationseinrichtungen zum gegenseitigen Datenaustausch ausgestattet. Die Drohnen sind dazu ausgebildet, selbständig Pflanzen anzufliegen, und jeweils mit einem Sensor zur Erkennung von Schädlingsbefall und einem für die Schädlingsbekämpfung geeigneten Lasergerät ausgestattet und dazu ausgebildet, erkannten Schädlingsbefall mittels des Lasergeräts gezielt zu bekämpfen.

Durch den Schwarm von vorzugsweise möglichst kleinen, autonom arbeitenden Drohnen kann ein definiertes Arbeitsgebiet vollautomatisch nach Schädlingen abgesucht, allfälliger Befall erkannt und selbstständig mit geeigneten physikalischen bzw. mechanischen Mitteln bekämpft werden. Vorteilhafterweise umfasst der Drohnenschwarm eine grosse Anzahl (Dutzende bis Hunderte oder Tausende) kleiner, leichter und günstiger, untereinander koordiniert arbeitender Drohnen, die ähnlich wie ein Bienen- oder Ameisenschwarm agieren, um ihre Arbeiten zielgerichtet punktuell an Zielpflanzen durchführen, was im Gegensatz zur traditionellen Landwirtschaft steht, wo Bearbeitungen grossflächig und nicht diversifiziert und zielgerichtet sind. Vorzugsweise weisen die Drohnen nur geringe Dimensionen im Bereich unter 25 cm auf, vorzugsweise im Bereich von 2-25 cm oder im Bereich von 0,5-15 cm. Vorzugsweise weisen die Drohnen ein niedriges Maximalabfluggewicht unter 500 g, vorzugsweise im Bereich von 5-500 g auf. Dadurch sind die Drohnen einerseits kostengünstig, was auch deren Einsatz in grossen Mengen erlaubt, andererseits aber auch im Vergleich zu schwereren Fluggeräten sicherer, da sie Mensch und Umwelt im Falle eines Absturzes weniger gefährden.

Ein besonderer Vorteil des erfindungsgemässen Systems im Zusammenhang mit der Schädlingsbekämpfung besteht darin, dass im Gegensatz zu traditionellen chemischen Schädlingsbekämpfungsverfahren, welche meist grossflächig eingesetzt werden und nicht nur befallene, sondern auch nicht befallene Pflanzen gleichermassen beaufschlagen, die Drohnen sehr punktuell arbeiten können, so dass nur tatsächlich befallene Pflanzen oder Pflanzenteile behandelt werden. Das erfindungsgemässe System eignet sich insbesondere auch, etwaigen Schädlingsbefall schon frühzeitig bei einzelnen Pflanzen zu entdecken und zu bekämpfen, bevor sich ein Befall auf weitere Pflanzen oder gar ganze Flächen ausbreiten kann, und trägt somit zu einer schonenden, risikoarmen und effizienten Landwirtschaft als Ganzes bei.

Mittels eines Lasergeräts als Bekämpfungswerkzeug kann eine sehr zielgerichtete Schädlingsbekämpfung vorgenommen werden.

Vorteilhafterweise verfügt das Lasergerät über eine automatisch einstellbare Optik, mittels welcher der Brennpunkt einstellbar ist. Dies ermöglicht es, dass sich die Drohne dem Zielobjekt nicht auf eine präzise Distanz annähern muss, da die einstellbare Optik einen optimalen Brennpunkt im Zielobjekt erlaubt.

Vorzugsweise ist die Steuerungsvorrichtung dazu ausgebildet, eine zu bearbeitende landwirtschaftliche Zielfläche festzulegen und den Drohnen zu kommunizieren, und sind die Drohnen dazu ausgebildet, Pflanzen innerhalb der festgelegten Zielfläche anzufliegen. Dadurch wird eine rationelle und zielgerichtete Bearbeitung ermöglicht.

Mit Vorteil ist die Steuerungsvorrichtung dabei dazu ausgebildet, die Drohnen so zu steuern, dass die Drohnen erst die festgelegte Zielfläche auf Schädlingsbefall absuchen und erst nach Abschluss dieser Suche der Bedarf an Bearbeitung durch die Steuerungsvorrichtung ermittelt wird und entsprechende Arbeitsaufträge an ausgewählte Drohnen für die Abarbeitung gewünschter Bearbeitungsschritte übermittelt werden.

Ein besonderer Vorteil des erfindungsgemässen Systems ist die Möglichkeit, einzelne Pflanzen zu untersuchen und bei Bedarf zu bearbeiten. Dies erlaubt es beispielsweise, anstatt homogener Monokulturen, die ökologisch über eine Vielzahl von Nachteilen verfügen (ökologisch wenig wertvoll, da kaum Diversität von Nutzorganismen gefördert wird, speziell grosse Anfälligkeit für auf einzelne oder wenige Nutzpflanzen spezialisierte Schädlinge), auch vermehrt Mischkulturen anzupflanzen. Mischkulturen zeichnen sich dadurch aus, dass unterschiedliche Nutzpflanzen nebeneinander und durchmischt angepflanzt und aufgezogen werden. Die einzelnen Nutzpflanzen profitieren dabei von gegenseitigen Vorteilen wie verbesserter Nährstoffverfügbarkeit oder resilienterem Ökosystem durch diverse Lebensgemeinschaften. Der Nachteil solcher Mischkulturen, nämlich die schwierige, wenn nicht sogar unmögliche traditionelle Bewirtschaftung durch selektive Schädlingsbekämpfung, besteht beim erfindungsgemässen System nicht, da die Drohnen im gesamten Gebiet der Mischkultur nach den einzelnen gewünschten Pflanzen Ausschau halten und diese nach Bedarf bearbeiten können. Ein entsprechend ausgerüsteter Schwarm von Drohnen kann ein Gebiet mit mehreren durchmischten Nutzpflanzenarten durchforsten und bei Bedarf eine Schädlingsbekämpfung durchführen.

Vorzugsweise sind die Drohnen dazu ausgebildet, direkt oder über die Steuerungsvorrichtung untereinander zu kommunizieren. Auf diese Weise lassen sich z.B. Kollisionen zwischen den Drohnen vermeiden.

Vorteilhafterweise sind die Drohnen dazu ausgebildet, von ihren Sensoren erfasste Daten an die Steuerungsvorrichtung zu übermitteln, und ist die Steuerungsvorrichtung dazu ausgebildet, von den Drohnen übermittelte Daten zu analysieren und daraus folgend Steuerungsinformationen an die Drohnen zu übermitteln. Auf diese Weise wird ein grosser Teil des Steuerungsaufwands an die Steuerungsvorrichtung ausgelagert, so dass die mobilen Drohnen einfacher und entsprechend leichter ausgebildet sein können.

Mit Vorteil ist der Sensor bzw. mindestens einer der Sensoren jeder Drohne als Kamera ausgebildet. Die Kamera kann im sichtbaren oder Infrarot- oder UV-Bereich arbeiten. Anstelle einer Kamera oder zusätzlich dazu können die Drohnen auch mit UltraschallSensoren, Radar-Sensoren oder Laser-Sensoren ausgerüstet sein. Diese Sensoren ermöglichen z.B. die Erkennung von Schädlingsbefall oder erleichtern die Navigation der Drohnen.

Vorteilhafterweise sind die Drohnen für die Navigation mit einer Positionsbestimmungseinrichtung ausgestattet. Dies ermöglicht einen gezielteren Einsatz jeder Drohne und ein exakteres Lagebild.

Mittels des Lasergeräts jeder Drohne kann ein Organismus auf dem Zielobjekt geschwächt, sterilisiert, abgetötet oder zerstört werden.

Vorteilhafterweise weisen die Drohnen eine Ausrichtanordnung zur Ausrichtung des Lasergeräts auf ein Zielobjekt auf. Dadurch ist eine präzisere Behandlung des Zielobjekts unabhängig von der genauen Position der Drohnen möglich.

Vorzugsweise sind die Drohnen elektrisch angetrieben und mit einem elektrischen Energiespeicher (Akkumulator) ausgestattet. Das System umfasst vorteilhafterweise mindestens eine Ladeeinrichtung für die Energiespeicher der Drohnen. Mit Vorteil sind die Drohnen dazu ausgebildet, bei Ladebedarf ihres Energiespeichers ihre Tätigkeit zu unterbrechen, die mindestens eine Ladeeinrichtung autonom anzufliegen und ihren Energiespeicher aufzuladen. Auf diese Weise ist die Einsatzdauer der Drohnen praktisch unbegrenzt. Vorteilhafterweise sind die Drohnen dazu ausgebildet sind, ihre Tätigkeit nach dem Aufladen ihres Energiespeichers automatisch wieder aufzunehmen.

Vorteilhafterweise weist das System mindestens eine Landeplattform für die Drohnen auf, wobei die Landeplattform mehreren Drohnen Platz bietet und wobei die mindestens eine Ladeeinrichtung in die Landeplattform integriert sind. Dadurch haben die Drohnen insbesondere für das Aufladen ein sichere Landegelegenheit.

Bei einer vorteilhaften Ausführungsvariante weist die Landeplattform einen elektrischen Ladeenergiespeicher zur Energieversorgung der mindestens einen Ladeeinrichtung und ein Photovoltaik-Panel auf oder ist selbst als Photovoltaik-Panel ausgebildet, wobei der Ladeenergiespeicher mittels des Photovoltaik-Panels aufladbar ist. Dies ermöglicht bei günstigen Verhältnissen einen energieautarken Betrieb über einen längeren Zeitraum.

Vorteilhafterweise ist die Landeplattform mobil, insbesondere selbstfahrend, ausgebildet. Dies erleichtert die Installation im Feld.

Die Steuerungsvorrichtung kann (mit Ausnahme der Kommunikationseinrichtung) entweder komplett als virtuelle Einheit konzipiert sein (gesamte Datenverarbeitung, Auswertung und Befehlsvergabe/Steuerung über geeignete Programme im Internet / in der Cloud), oder aber eine reale zentrale Steuereinheit oder reale dezentrale Steuereinheiten (eventuell sogar als Teil der Drohnen selbst) umfassen, die selber über entsprechende Recheneinheiten verfügt bzw. verfügen.

Vorteilhafterweise verfügt dabei eine reale zentrale oder dezentrale Steuereinheit für die Steuerung der Drohnen über eine Recheneinheit, eine Kommunikationseinrichtung und eine Energieversorgung.

Bevorzugt ist eine reale zentrale oder dezentrale Steuereinheit auch als Lager- und Landeplattform mit integrierten Ladeeinrichtungen für die Drohnen ausgebildet.

Vorteilhafterweise sind die Kommunikationseinrichtungen des Systems für die gegenseitige Kommunikation bzw. den Datenaustauch über Telefonnetz, Funk, Bluetooth, Wireless, IR oder Laser mit den einzelnen Vorrichtungsteilen ausgebildet.

Mit Vorteil ist die zentrale Steuereinheit als Kommunikationshub ausgebildet zur Kommunikation mit und zwischen den Drohnen und gegebenenfalls einer entfernten Überwachungseinheit.

Vorteilhafterweise sind die Drohnen mit Solarzellen zur Aufladung ihrer Energiespeicher ausgestattet. Dadurch können separate Ladestationen entfallen.

Mit Vorteil ist die reale zentrale Steuerungsvorrichtung mobil ausgebildet, so dass sie zu einem Einsatzgebiet transportiert werden kann. Dabei ist die zentrale Steuerungsvorrichtung vorteilhafterweise dazu ausgebildet, sich selbstständig zum Einsatzgebiet und innerhalb desselben zu bewegen. Die reale zentrale Steuerungsvorrichtung kann dabei auch selbst flugfähig ausgebildet sein.

Das erfindungsgemässe System zur Schädlingsbekämpfung wird nun unter Bezugnahme auf die beigefügten Zeichnungen anhand von verschiedenen Ausführungsbeispielen detaillierter beschrieben. Es zeigen:
- Fig. 1 -: eine blockschematische Darstellung eines ersten Ausführungsbeispiels des erfindungsgemässen Systems;
- Fig. 2 -: eine blockschematische Darstellung eines zweiten Ausführungsbeispiels des erfindungsgemässen Systems;
- Fig. 3-4 -: vereinfachte Darstellungen einer Steuerungsvorrichtung des erfindungsgemässen Systems mit Drohnen im Ruhezustand bzw. im Einsatz-Zustand;
- Fig. 5 -: eine vereinfachte schematische Darstellung einer mobilen Steuerungsvorrichtung;
- Fig. 6 -: eine schematische Darstellung einer ortsgebundenen Steuerungsvorrichtung;
- Fig. 7 -: eine beispielsweise Anordnung von ortsgebundenen Steuerungsvorrichtungen in einem landwirtschaftlichen Feld;
- Fig. 8 -: eine vereinfachte Darstellung einer Drohne des erfindungsgemässen Systems;
- Fig. 9-12 -: vereinfachte Darstellungen unterschiedlicher Bekämpfungswerkzeuge der Drohnen;
- Fig. 13-14 -: Darstellungen zur Erläuterung der Arbeitsweise eines Bekämpfungswerkzeugs der Drohnen; und
- Fig. 15-18 -: Darstellungen eines Ausführungsbeispiels des erfindungsgemässen Systems in verschiedenen Phasen eines Feldeinsatzes am Beispiel eines Mischkultur-Feldes.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

Unter «Drohne» wird ein unbemanntes Luftfahrzeug verstanden, welches ohne eine an Bord befindliche Besatzung autark durch einen internen Computer und/oder von aussen über eine Fernsteuerung betrieben und navigiert werden kann.

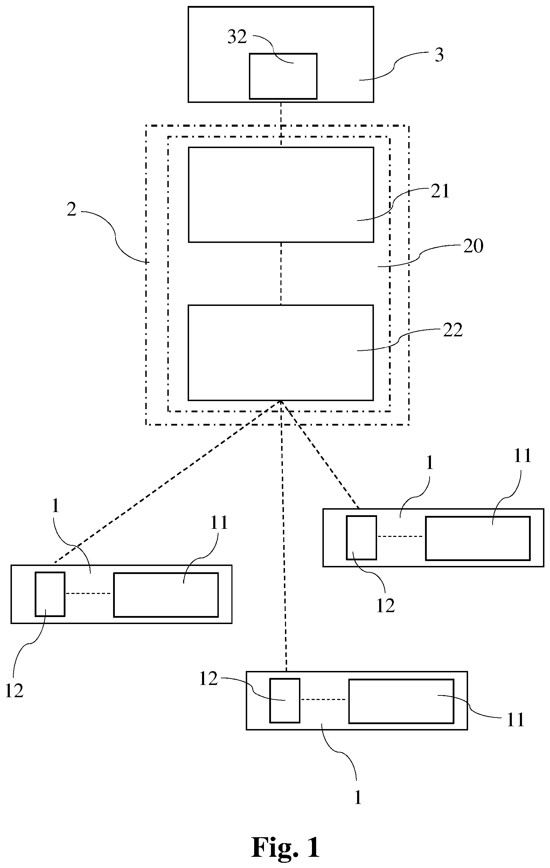

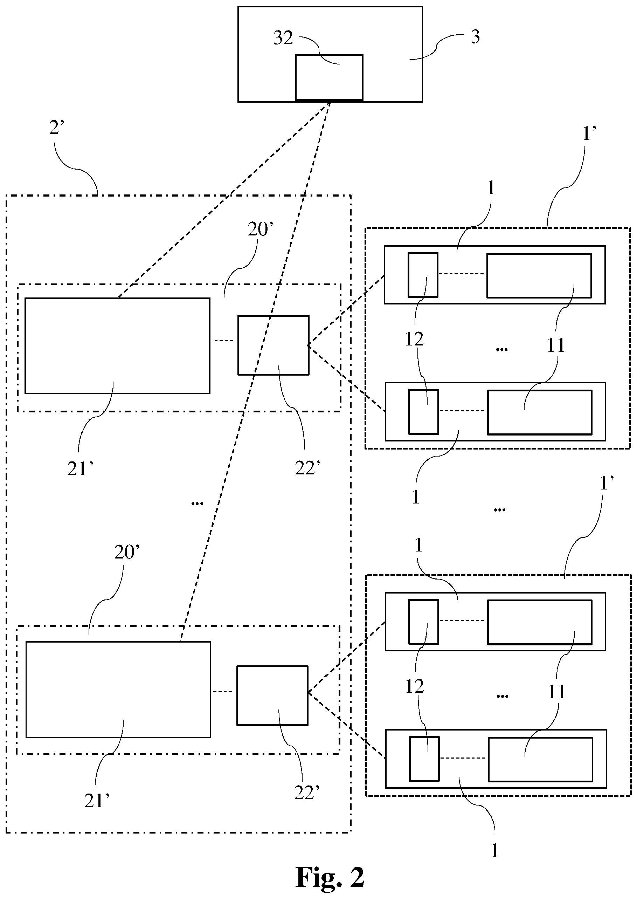

Grundsätzlich umfasst das erfindungsgemässe System als wichtigste Komponenten eine Mehrzahl von Drohnen 1 und eine Steuerungsvorrichtung 2 bzw. 2' für die Drohnen 1 sowie einen lokalen Rechner 3. Der Übersichtlichkeit halber sind die Drohnen in den Zeichnungsfiguren allesamt und unabhängig von ihren konkreten Detailausbildungen als Ganzes jeweils mit demselben Bezugszeichen 1 bezeichnet. In den Figuren 1 und 2 sind nur einige wenige Drohnen 1 dargestellt, in Realität umfasst das erfindungsgemässe System aber eine wesentlich grössere Anzahl von Drohnen 1. Der lokale Rechner 3 befindet sich normalerweise beim Einsatzstützpunkt des Systems (z.B. bei einem Landwirtschaftsbetrieb) und dient als Benutzer-Schnittstelle, um Daten und Instruktionen mit der Steuereinrichtung 2 bzw. 2' auszutauschen. Über den lokalen Rechner 3 bedient der Benutzer das System. Er plant Einsätze, definiert Einsatzgebiete, Arbeitsmethoden, Zeitpläne etc., löst den Einsatz aus und überwacht diesen. Zudem erfolgt hier auch die Auswertung erfolgter Einsätze, Überwachung des Zustands der im Feld befindlichen Drohnen etc..

Im Ausführungsbeispiel der Fig. 1 umfasst die Steuerungsvorrichtung 2 eine zentrale Steuereinheit 20, die ihrerseits eine Recheneinheit 21 und eine Kommunikationseinrichtung 22 umfasst. Die Drohnen 1 umfassen jeweils eine interne Steuerung 11 und eine interne Kommunikationseinrichtung 12. Die Steuerungsvorrichtung 2 und die Drohnen 1 stehen über die Kommunikationseinrichtung 22 und die internen Kommunikationseinrichtungen 12 untereinander in Verbindung, so dass zwischen der zentralen Steuereinheit 20 bzw. deren Recheneinheit 21 und den internen Steuerungen 11 gegenseitig Daten übertragen bzw. ausgetauscht werden können. Der lokale Rechner 3 verfügt ebenfalls über eine Kommunikationseinrichtung 32 zum Datenaustausch mit der zentralen Steuereinheit 20.

Im Ausführungsbeispiel der Fig. 2 ist die Steuerungsvorrichtung 2' dezentral ausgelegt und umfasst zwei oder mehrere (in Fig. 2 gleich bezeichnete) dezentrale Steuereinheiten 20', die ihrerseits je eine Recheneinheit 21' und eine Kommunikationseinrichtung 22' umfassen. Die Drohnen 1 sind in Gruppen 1' organisiert und umfassen wieder jeweils eine interne Steuerung 11 und eine interne Kommunikationseinrichtung 12. Jede Gruppe 1' von Drohnen 1 ist einer der dezentralen Steuereinheiten 20' zugeordnet. Die Anzahl von Drohnen 1 innerhalb der Gruppen 1' kann gleich oder unterschiedlich sein. Die dezentralen Steuereinheiten 20' und die Drohnen 1 stehen über die Kommunikationseinrichtungen 22' und die internen Kommunikationseinrichtungen 12 der Drohnen 1 untereinander in Verbindung, so dass zwischen den dezentralen Steuereinheiten 20' und den Drohnen 1 gegenseitig Daten übertragen bzw. ausgetauscht werden können. Der lokale Rechner 3 steht über seine Kommunikationseinrichtung 32 ebenfalls mit den dezentralen Steuereinheiten 20' in Verbindung. Die Verbindung zwischen den dezentralen Steuereinheiten 20' und den mobilen Drohnen 1 sowie dem lokalen Rechner 3 kann natürlich auch indirekt über eine hier nicht dargestellte zentrale Kommunikationseinrichtung erfolgen.

Die dezentralen Steuereinheiten 20' sind zusammen mit einer jeweils eigenen Energieversorgung als eigenständige physische Einheiten ausgebildet, die im Betrieb des Systems im zu bearbeitenden Feld platziert werden. Vorzugsweise verfügt dabei jede Einheit über wenigstens eine Landeplattform und Ladestation für die Drohnen 1.

Die Kommunikation zwischen den Drohnen 1 und der Steuereinrichtung 2 bzw. 2' erfolgt vorzugsweise drahtlos über eine geeignete Technologie wie z.B. Funk, Mobiltelefonnetz, Laser, Bluetooth, WiFi.

Die Grundidee der Erfindung besteht darin, gewünschte landwirtschaftliche Arbeiten mittels einer Vielzahl von weitgehend autonom arbeitenden Drohnen durchzuführen. Entsprechend sind die Drohnen 1 mit speziellen Werkzeugen, insbesondere Bekämpfungswerkzeugen, versehen, mit Hilfe welcher eine oder mehrere Arten von landwirtschaftlichen Arbeiten ausgeführt werden können. Dazu gehören in erster Linie Schädlingsbekämpfung an Pflanzen aber z.B. auch Ernten von Früchten, Unkrautentfernung, Bestäubung von Blüten, Düngung, Bewässerung, Setzen von Samen oder Pflanzensetzlingen etc. Die Drohnen 1 bilden zusammen mit der Steuerungsvorrichtung 2 bzw. 2' ein kommunikativ vernetztes autonomes System zur Durchführung gewünschter landwirtschaftlicher Arbeiten. Die «Intelligenz» des Systems, also die für das Fliegen und die Navigation der Drohnen sowie die Steuerung der Bekämpfungswerkzeuge derselben und die Verarbeitung von von den Drohnen erfassten Daten und daraus folgende Ableitung von Anweisungen für die Drohnen erforderlichen Funktionalitäten, ist auf die internen Steuerungen 11 der Drohnen 1 und die zentrale Steuereinheit 20 bzw. die dezentralen Steuereinheiten 20' aufgeteilt, wobei vorzugsweise der Hauptteil der dafür erforderlichen Rechenleistung von der zentralen Steuereinheit 20 bzw. den dezentralen Steuereinheiten 20' erbracht wird, so dass die interne Steuerung 11 der Drohnen 1 verhältnismässig weniger aufwändig ausfallen kann.

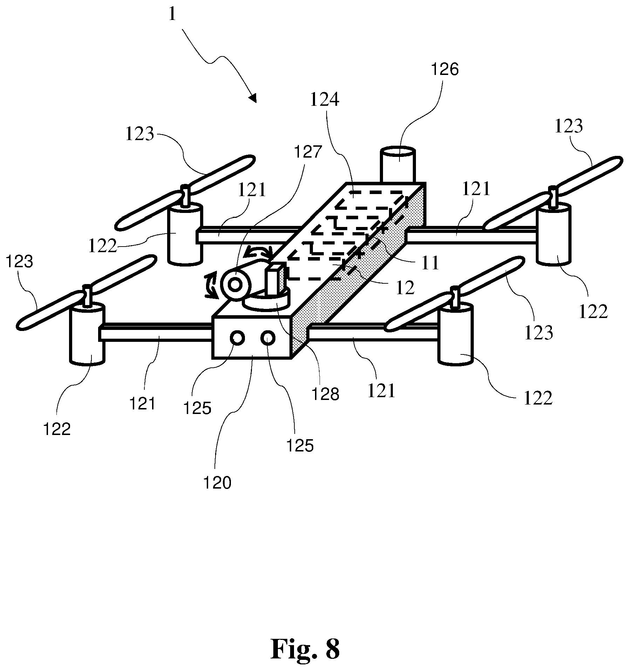

Gemäss einem wichtigen Aspekt der Erfindung sind die Drohnen 1 elektrisch angetrieben. Ein typisches Beispiel einer Drohne ist in Fig. 8 dargestellt. Die Drohne ist hier im Beispiel als Quadrocopter ausgeführt. Quadrocopter-Drohnen mit vier einzeln ansteuerbaren Rotoren kommen mit einer relativ einfachen Steuerungselektronik aus und benötigen keinerlei zusätzliche beweglichen Steuerorgane, da alle Richtungsbewegungen des Drohnenflugs ausschliesslich durch koordiniertes Verändern der Drehzahlen der einzelnen Rotoren erfolgt. Dies erlaubt somit eine sehr kostengünstige Fertigung einer grossen Anzahl kleiner Drohnen.

Selbstverständlich lassen sich als Drohnen auch andere Drohnentypen (mit Flügeln schlagende Ornithopter, mit Haupt- und Heckrotor ausgestattete Helikopter, Helikopter mit gegenläufigen Rotoren, oder auch Flächen-Fluggeräte oder motorisiert angetriebene luftschiffartige Drohnen, etc.) einsetzen.

Die in Fig. 8 dargestellte, als Ganze mit 1 bezeichnete Drohne umfasst einen Rumpf 120, an dem über Ausleger 121 vier Elektromotoren 122 montiert sind, welche horizontal liegende, vertikal wirkende Rotoren 123 antreiben. Im Rumpf 120 sind die interne Steuerung 11, die interne Kommunikationseinrichtung 12 und ein Energiespeicher in Form eines Akkumulators 124 angeordnet.

Die Drohne 1 verfügt über Sensoren 125, welche es ihr erlauben, die Umwelt wahrzunehmen. Beispielsweise ist ein Sensor als im sichtbaren Bereich arbeitende Kamera ausgebildet. Vorteilhafterweise können aber auch Sensoren vorhanden sein, die im Infrarotbereich, UV-Bereich oder anderen Wellenlängenbereichen arbeiten, so dass es beispielsweise möglich ist, etwa beschädigte oder von Schädlingen befallene Pflanzen oder Pflanzenteile anhand deren von gesunden bzw. nicht befallenen Pflanzen unterschiedlicher Wärmeabstrahlung oder UV-Abstrahlung zu erkennen und den Befall zu erkennen und sogar zu identifizieren. Die Erkennung von (Nutz-)Pflanzen, Schädlingen, Früchten etc. erfolgt dabei über entsprechend geeignete Bilderkennungssysteme. Diese sind vorteilhafterweise in der zentralen Steuereinheit 20 oder den dezentralen Steuereinheiten 20' implementiert, welche dazu mit einer entsprechenden Rechenleistung ausgestattet ist bzw. sind. Dadurch muss die interne Steuereinheit 11 der Drohne 1 selbst kein aufwändiges Bilderkennungs- und Analysesystem enthalten und kann daher klein und leicht gehalten sein.

Um die Position der Drohne 1 jederzeit bestimmen zu können, ist sie mit einer Positionsbestimmungseinrichtung 126 ausgestattet. Eine solche Positionsbestimmungseinrichtung kann beispielsweise ein GPS-Empfänger sein, aber z.B. auch ein kreiselgestütztes oder ein die Beschleunigungsmessung nutzendes System.

Die Drohne 1 weist ferner ein Bekämpfungswerkzeug auf, hier im dargestellten Beispiel in Form eines Lasergeräts 127, mit welchem Schädlinge bestrahlt und damit je nach Laserstärke und Bestrahlungszeit sterilisiert, geschädigt oder sogar zerstört werden können. Andere Bekämpfungswerkzeuge werden weiter unten aufgezählt und erklärt. Vorteilhafterweise ist das Bekämpfungswerkzeug bzw. das Lasergerät 127 auf einer in einer oder mehreren Achsen ausrichtbaren Ausrichtanordnung 128 montiert, die es erlaubt, das Bekämpfungswerkzeug 127 unabhängig von der Ausrichtung und Position der Drohne 1 selbst auf ein gewünschtes Zielobjekt auszurichten. Auf eine solche Ausrichtanordnung kann allenfalls aber verzichtet werden, wenn die Flugsteuerung der Drohne selbst über eine genügend präzise und genaue Möglichkeit verfügt, auch ein fest montiertes Werkzeug punktgenau im dreidimensionalen Raum zu positionieren, durch Ausrichten der ganzen Drohne auf ein Zielobjekt auszurichten und diese Position genügend lange beizubehalten, so dass das Bekämpfungswerkzeug seine Aufgabe durchführen und abschliessen kann.

Das als Bekämpfungswerkzeug für die Schädlingsbekämpfung eingesetzte Lasergerät 127 ist so konzipiert, dass sein Brennpunkt ca. 1-200 cm vom Lasergerät entfernt liegt. Vorteilhafterweise verfügt das Lasergerät 127 über eine automatisch einstellbare Optik (Fokussierlinse), mittels welcher sich der Brennpunkt nach Bedarf in einem gewissen Bereich einstellen lässt. Dies erlaubt, dass sich die Drohne dem Zielobjekt nicht auf eine präzise Distanz annähern muss, da die einstellbare Optik einen optimalen Brennpunkt im Zielobjekt erlaubt. Eine entsprechende Einstellmechanik entspricht dem technischen Standard und wird hier nicht weiter ausgeführt.

Für die Bekämpfung von Schadorganismen sind Laser mit einer Wellenlänge von 10⁻⁵ bis 10⁶ nm geeignet. Zur Bekämpfung von Unkräutern kann z.B. ein CO₂-Laser mit einer Wellenlänge von 10600 nm oder ein Thulium-Faser-Laser mit einer Wellenlänge von etwa 2000 nm eingesetzt werden.

Je nach Einsatzbereich der Drohne 1 kann es von Vorteil sein, der Ausrichtanordnung 128 zusätzlich zum Bekämpfungswerkzeug noch weitere Hilfsmittel, z.B. Kameras oder Laserentfernungsmesser, hinzuzufügen, welche es erlauben, ein Zielobjekt besser zu identifizieren, als dies mit den Sensoren 125 der Drohne selber möglich wäre, oder auch die exakte Distanz zum Zielobjekt zu ermitteln, was wiederum die optimale Einstellung beispielsweise des Brennpunkts des Lasergeräts 127 zur Schädlingsbekämpfung erlauben würde. Solche (nicht dargestellten) optionalen Sensoren und Werkzeuge können zweckmässigerweise ebenfalls auf der Ausrichtanordnung montiert sein. Auch ist es selbstverständlich möglich und vorteilhaft, eine Drohne mit für verschiedene Aufgaben geeigneten unterschiedlichen Werkzeugen auszustatten. So könnte eine solche Mehrzweckdrohne beispielsweise mit einem Lasergerät zur Schädlingsbekämpfung und gleichzeitig einem Greifer als z.B. Ernte- und Jätwerkzeug ausgerüstet sein.

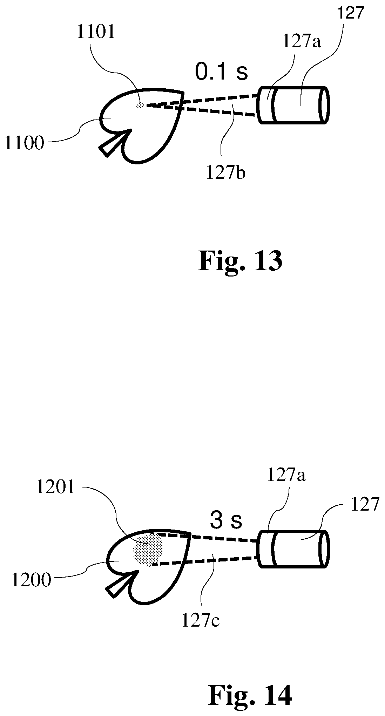

Tests haben gezeigt, dass bereits mit einem kleinen Laser mit 2 W Leistung und einer Wellenlänge von 405 nm bereits nach wenigen Millisekunden bis zu einigen Sekunden Bestrahlung organisches Material auch auf Distanzen von 1-2 Metern zum Entzünden gebracht werden kann. Um einen Schädlingsorganismus zu bekämpfen, ist aber auch eine geringere Leistung pro Zeiteinheit ausreichend, da ein Zielorganismus ja nicht zwingend verbrannt, sondern lediglich soweit geschädigt werden muss, dass er abstirbt oder sich nicht mehr weiter fortpflanzen kann. Dies zeigt vereinfacht schematisch die Fig. 13. Mit einem mittels einer Fokussieroptik 127a auf einen kleinen Punkt fokussierten Laserstrahl 127b können auch mit kurzen Laserimpulsen von z.B. 0.1 s Dauer kleinflächige Schadorganismen 1101 auf einer Pflanze 1100 beschädigt werden. Fig. 14 zeigt im Gegensatz dazu einen grossflächigeren Schädlingsbefall 1201 auf einer Pflanze 1200, der vom selben Lasergerät 127 mit einem durch die Fokussieroptik 127a breit/unscharf fokussierten Laserstrahl 127c bestrahlt wird. Hier ist eine wesentlich längere Bestrahlungszeit von z.B. 3 s notwendig, um ausreichend Laserenergie auf die ganze Fläche des Schadorganismus 1201 zu bringen und diesen zu schädigen.

Vorteilhafterweise ist das Arbeitswerkzeug (speziell das Lasergerät 127) so an der Drohne 1 angebracht, dass ein möglichst grosser Bereich vertikal wie horizontal vom Werkzeug bearbeitbar ist, ohne dass die Drohne selbst durch entsprechende Flugmanöver ausgerichtet werden muss.

Je nach Anwendungsbereich sind auch andere Bekämpfungswerkzeuge möglich. Für die Ernte von Früchten, beispielsweise Beeren und Nüssen, aber je nach Grösse der Drohnen auch grösseres Obst und Gemüse, ist als Bekämpfungswerkzeug ein entsprechend ausgebildetes Greifwerkzeug vorteilhaft, allenfalls ersetzt durch oder ergänzt mit einer Zange oder Schere oder ein zusätzliches Lasergerät, welche Pflanzenteile wie beispielsweise den Stiel einer Frucht oder eines Blattes durchtrennen kann.

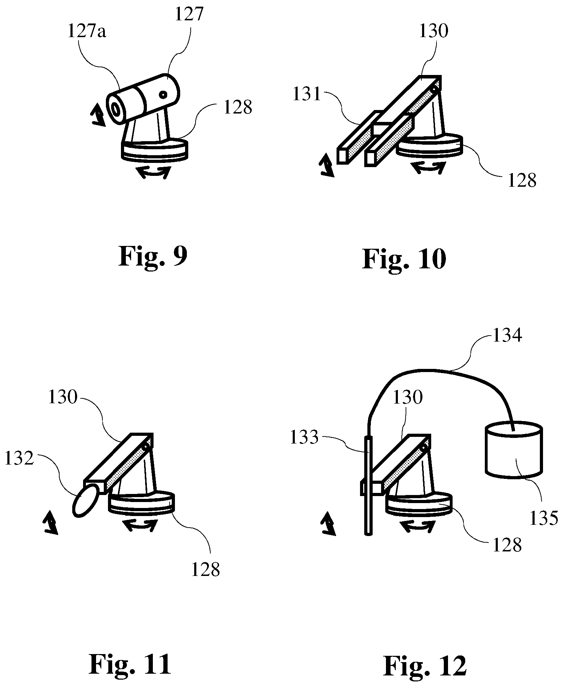

Die Figuren 9 bis 12 zeigen sehr vereinfacht verschiedene Bekämpfungswerkzeuge der Drohnen 1 für verschiedene landwirtschaftliche Arbeiten.

Fig. 9 stellt wie in Fig. 8 ein für die Schädlingsbekämpfung ausgelegtes Lasergerät 127 dar, das auf einer Ausrichtanordnung 128 angebracht und mittels dieser auf ein Zielobjekt ausrichtbar ist. Eine Fokussiervorrichtung 127a, beispielsweise in Form eines einstellbaren Linsensystems, erlaubt es dabei, den Laserstrahl je nach Bedarf auf einen definierten Punkt oder eine definierte Fläche zu fokussieren (siehe dazu auch die Ausführungen zu Figuren 13 und 14).

Fig. 10 zeigt ein mechanisches Bekämpfungswerkzeug in Form eines Greifers 131, der auf einem Mini-Roboterarm 130 angebracht ist, welcher seinerseits wiederum auf einer Ausrichtanordnung 128 angebracht ist. Der Greifer 131 ist so ausgebildet, dass er beispielsweise Pflanzenteile, Früchte, etc. greifen, entfernen und transportieren kann.

Fig. 11 zeigt ein speziell für die Bestäubung von Blüten ausgelegtes Bekämpfungswerkzeug in Form eines Bestäubungspinsels 132, welcher auf einem Mini-Roboterarm 130 angebracht ist. Mit dem Bestäubungspinsel 132 können Pollen von einer Blüte zu einer oder vielen anderen Blüte(n) transportiert und dort deponiert werden. Auch hier ist der Mini-Roboterarm 130 auf einer Ausrichtanordnung 128 angebracht.

Fig. 12 zeigt ein Bekämpfungswerkzeug in Form einer Dosiervorrichtung 133 zur punktuellen Abgabe von Flüssigkeiten (beispielsweise Wasser, Dünger, spezielles Biozid, Pflanzenschutzmittel). Die Dosiervorrichtung 133 ist auf einem wieder auf einer Ausrichtanordnung 128 angebrachten Roboterarm 130 montiert und über eine Flüssigkeitsleitung 134 mit einem Flüssigkeitsreservoir 135 verbunden. Die Dosiervorrichtung 133 kann Flüssigkeit volumen- und punktgenau an einer gewünschten Zielposition abgeben. Natürlich sind alle gängigen Dosiervorrichtungen für Flüssigkeiten und Feststoffe (Pipetten, vorgefüllte Kartuschen, Dosiercontainer, ...) einsetzbar. Und natürlich ist es je nach Einsatzbereich auch möglich, auf einzelne Teilvorrichtungen zu verzichten. So könnte beispielsweise auf die Ausrichtanordnung 128 verzichtet werden, wenn die Drohne 1 selbst technisch so ausgeführt ist, dass sie sich so positionieren kann, dass ein fest montiertes Bekämpfungswerkzeug ausreichend genau und präzise gegenüber einem Zielobjekt ausgerichtet und positioniert werden kann.

Je nach Anwendungsfall kann selbst die Abluft der Rotoren der Drohnen zur Erledigung von Aufgaben verwendet werden, beispielsweise indem mit dem Rotorwind Verunreinigungen (Staub, Russ, organisches Material) weggeblasen und somit entfernt werden können.

Die Drohne 1 kann auch mit Photovoltaikzellen ausgerüstet sein (zeichnerisch nicht dargestellt), beispielsweise als Beschichtung der Rotoren, oder Photovoltaikzellen auf Rumpf, etc., welche es ermöglichen, den Energiespeicher 124 während des Flugs, speziell aber auch, wenn die Drohne gelandet ist, aufzuladen. Die dabei gewonnene Energiemenge kann für die Notlandung oder den Notheimflug der Drohne genützt werden.

Die einzelnen Drohnen bzw. Drohnen 1 sind, wie schon erläutert, je nach ihrem konkreten Einsatzzweck verschiedenartig ausgebildet. Es ist ihnen allerdings gemein, dass sie über geringe Dimensionen und ein niedriges Maximalabfluggewicht verfügen, was eine kostengünstige Herstellung und damit einen Einsatz in grossen Mengen erlaubt. Anderseits sind leichte Drohnen im Vergleich zu schwereren Fluggeräten sicherer und gefährden Mensch und Umwelt im Falle eines Absturzes kaum. Optimal ist dabei eine Grösse (grösste Abmessung) von unter 25 cm, vorzugsweise 2-25 cm, und ein maximales Abfluggewicht von unter 500 g, vorzugsweise 5-500 g. Aber auch leicht grössere/schwerere oder vor allem auch kleinere/leichtere Drohnen sind möglich.

Eine wichtige Anforderung an die Drohnen ist, dass sie (im Flug) möglichst genau und präzis relativ zu einem Zielobjekt (z.B. einer Pflanze) positioniert werden können und eine ruhige Fluglage aufweisen. Da die auf der Drohne montierten Bekämpfungswerkzeuge oft sehr genau (Zentimeter- bis Millimeter-Bereich) auf ein Zielobjekt (z.B. Schadorganismus auf der Pflanze, zu sammelnde Frucht, etc. ...) ausgerichtet werden müssen und/oder eine klar definierte Position über mehrere Sekunden möglichst exakt gehalten werden muss, um etwa einem Bekämpfungswerkzeug wie einem Lasergerät oder Greifer genügend Zeit zu verschaffen, seine Aufgabe auszuführen, ist eine möglichst präzise Positionierung im dreidimensionalen Raum vonnöten. Die dafür erforderlichen Technologien stehen dem Fachmann zur Verfügung und bedürfen deshalb keiner tieferen Erläuterung.

Das erfindungsgemässe System muss nicht über nur einen einzigen Typ von Drohnen verfügen, sondern kann auch verschieden ausgebildete Drohnen umfassen, wobei diese bzw. ihre Bekämpfungswerkzeuge für verschiedene Arbeiten ausgelegt und optimiert sind. So können einzelne Drohnen für die Schädlingsbekämpfung ausgebildet sein, während andere, gegebenenfalls auch gleichzeitig dazu zum Einsatz kommende Drohnen für die Bewirtschaftung von Agrarpflanzen (Bewässerung, Setzen/Säen, Bestäuben) ausgebildet sind und wieder andere Drohnen zum Ernten oder Jäten speziell ausgerüstet sind.

Die zentrale Steuereinheit 20 der Steuerungsvorrichtung 2 kann rein virtuell ausgebildet sein, z.B. als entsprechende Programm- und Datenbankstruktur im Internet bzw. einer Cloud. Sie kann aber auch als reale Einheit ausgebildet sein. Gleiches gilt für die dezentralen Steuereinheiten 20' der Steuerungsvorrichtung 2'.

Die Steuerungsvorrichtung 2 bzw. 2' ist so ausgebildet, dass sie mit ruhenden (gelandeten) und auch mit aktuell im Einsatz stehenden (fliegenden) Drohnen 1 kommunizieren kann, beispielsweise um von den aktuell im Einsatz stehenden Drohnen 1 Positionsangaben und Bilder oder andere Sensordaten zu erhalten. Diese Daten werden von der Steuerungsvorrichtung 2 bzw. 2' ausgewertet und darauf basierend sendet die Steuerungsvorrichtung 2 bzw. 2' detaillierte Instruktionen an die Drohnen 1 oder steuert diese sogar selbst. Da somit die Hauptrechenarbeit direkt in der Steuerungsvorrichtung 2 bzw. 2' ausgeführt wird, können die Drohnen 1 ausreichend klein und leicht gehalten werden, was insofern vorteilhaft ist, als die Drohnen einerseits kostengünstiger, andererseits auch einfacher ausgebildet sein können und über ein günstiges Gewichtsverhältnis zwischen der eigentlichen Drohne, dem für den Betrieb notwendigen Akkumulator und der durch das Bekämpfungswerkzeug dargestellten Nutzlast der Drohne verfügen.

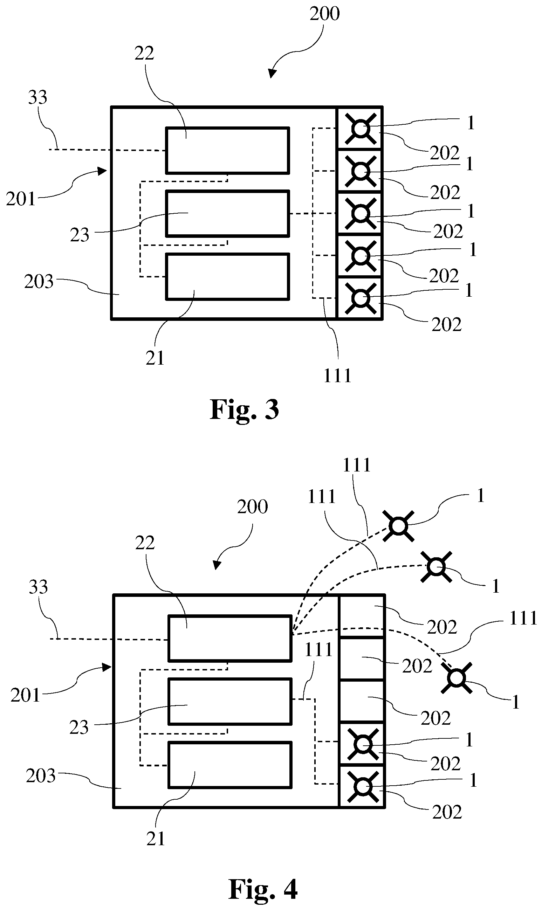

Die Figuren 3 und 4 zeigen schematisch eine praktische Implementierung der Steuerungsvorrichtung 2.

Die als Ganze mit 200 bezeichnete Steuerungsvorrichtung umfasst ein Gehäuse 201, in welchem die Recheneinheit 21 und die Kommunikationseinrichtung 22 sowie ein Ladeenergiespeicher 23 untergebracht sind. Eine Oberseite des Gehäuses 201 ist als Landeplattform 203 ausgebildet. In bzw. an der Landeplattform 203 sind mehrere (im gezeigten Beispiel fünf) Ladeeinrichtungen 202 angeordnet, die vom Ladeenergiespeicher 23 gespeist werden. Die Ladeeinrichtungen 202 können beispielsweise als induktive Ladeeinrichtungen ausgebildet sein, welche eine kontaktlose Ladung ermöglichen. Die Landeplattform bzw. deren Ladeeinrichtungen 202 können von den Drohnen 1 angeflogen werden, um dort ihre Energiespeicher (wieder) aufzuladen. Fig. 3 zeigt die Steuerungsvorrichtung 200 im Lager-/Ruhezustand, wobei sich alle Drohnen 1 auf der Landeplattform 203 befinden. Fig. 4 zeigt die Steuerungsvorrichtung 200 in einem Zustand, in welchem einige Drohnen 1 im Einsatz und andere Drohnen sich auf den Ladeeinrichtungen der Landeplattform befinden. Die gestrichelten Linien 111 und 33 symbolisieren die Kommunikationsverbindungen zwischen der Kommunikationseinrichtung 22 und den Drohnen 1 bzw. dem (hier nicht dargestellten) lokalen Rechner 3.

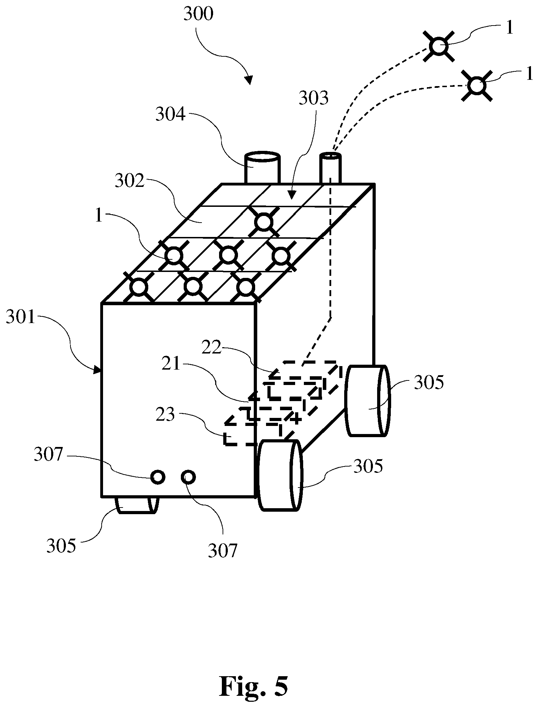

Fig. 5 zeigt eine mobile Implementierung der Steuerungsvorrichtung als autonom mobiles Steuergerät. Mit Ausnahme von einigen zusätzlichen Komponenten ist die hier als Ganze mit 300 bezeichnete Steuerungsvorrichtung gleich aufgebaut wie die in den Figuren 3 und 4 gezeigte. Die Steuerungsvorrichtung 300 umfasst ein Gehäuse 301, in welchem die Recheneinheit 21 und die Kommunikationseinrichtung 22 sowie ein Ladeenergiespeicher 23 untergebracht sind. Eine Oberseite des Gehäuses 301 ist als Landeplattform 303 ausgebildet. In bzw. an der Landeplattform 303 sind mehrere (im gezeigten Beispiel zwölf) Ladeeinrichtungen 302 angeordnet, die vom Ladeenergiespeicher 23 gespeist werden. Die Ladeeinrichtungen 202 können beispielsweise als induktive Ladeeinrichtungen ausgebildet sein, welche eine kontaktlose Ladung ermöglichen. Die Ladeeinrichtungen 302 können von den Drohnen 1 angeflogen werden, um dort ihre Akkumulatoren (wieder) aufzuladen. Die Landeplattform 303 ist mit Photovoltaik-Zellen ausgerüstet und dient als Energielieferant für den Ladeenergiespeicher 23. Zusätzlich umfasst die Steuerungsvorrichtung 300 eine Positionsbestimmungsvorrichtung 304, beispielsweise einen GPS-Empfänger, sowie eine Bewegungsvorrichtung, die hier beispielsweise durch vorzugsweise motorisch angetriebene Räder 305 symbolisch dargestellt ist. Alternativ kann die Bewegungsvorrichtung auch als Raupenantrieb oder in Form von Schreitbeinen ausgebildet sein. Gesteuert wird die Bewegungsvorrichtung durch die Recheneinheit 21 unterstützt durch die Positionsbestimmungsvorrichtung 304 und Sensoren 307, so dass die Steuerungsvorrichtung 300 (geleitet von Instruktionen vom lokalen Rechner 3) autonom beweglich ist.

Die autonom mobile Steuerungsvorrichtung 300 kann beispielsweise selbstständig ihr Einsatzgebiet aufsuchen oder von diesem zum Stützpunkt zurückkehren. Sie kann auch dem in einem Einsatzgebiet arbeitenden Drohnenschwarm autonom folgen, um diesen mit Funkinformationen und Instruktionen zu beliefern und als Ladestation optimal zu unterstützen. In einer weiteren speziellen Ausführung könnte die mobile Steuerungsvorrichtung selbst nicht nur fahr- sondern sogar auch flugfähig ausgebildet sein und gewissermassen als fahrendes bzw. fliegendes «Mutterschiff» für den Drohnenschwarm funktionieren.

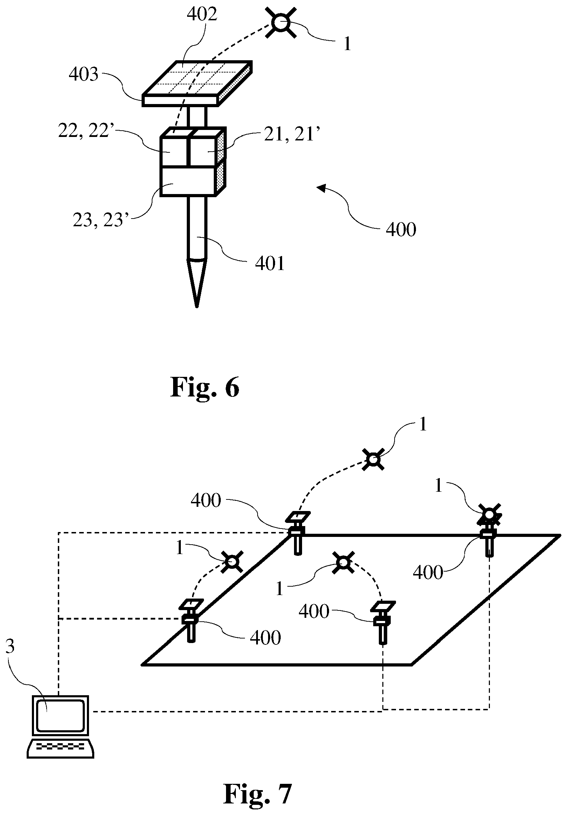

In Fig. 6 ist eine alternative Implementierung einer Steuerungsvorrichtung dargestellt. Die hier als Ganze mit 400 bezeichnete Steuerungsvorrichtung ist alleine (als zentrale Steuereinheit 20) oder in mehrfacher Ausführung (als dezentrale Steuereinheiten 20') einsetzbar und als ortsfest, beispielsweise nahe von, direkt bei oder in den zu bearbeitenden landwirtschaftlichen Flächen aufzustellende körperliche Einheit ausgebildet. Sie umfasst dazu einen Pfahl (Erdspiess) 401, der vorteilhafterweise so hoch ist, dass er im aufgestellten Zustand die Vegetation überragt. Am Pfahl 401 sind im Falle einer zentralen Steuereinheit eine Recheneinheit 21, eine Kommunikationseinrichtung 22 und ein Ladeenergiespeicher 23 und im Falle von dezentralen Steuereinheiten eine Recheneinheit 21', eine Kommunikationseinrichtung 22' und ein Ladeenergiespeicher 23' montiert. Zusätzlich ist am Ende des Pfahls 401 eine Landeplattform 403 für eine oder mehrere Drohnen 1 angeordnet. Die Landeplattform 403 ist mit Photovoltaik-Zellen ausgerüstet und dient als Energielieferant für den Ladeenergiespeicher 23 bzw. 23'. Ausserdem sind in bzw. an der Landeplattform 403 mindestens eine Ladeeinrichtung 402 für auf ihr gelandete Drohnen 1 angeordnet. Die Ladeeinrichtungen 402 können beispielsweise als induktive Ladeeinrichtungen ausgebildet sein, welche eine kontaktlose Ladung ermöglichen. Bei ausreichenden Lichtverhältnissen wird über die Photovoltaikfläche der Landeplattform 403 der Ladeenergiespeicher 23 bzw. 23' aufgeladen, und diese gespeicherte Energie wird für den Betrieb der Recheneinheit 21 bzw. 21' und der Kommunikationseinrichtung 22 bzw. 22' sowie zum Aufladen der Drohnen 1 verwendet und erlaubt somit einen weitgehend autonomen Einsatz der gesamten Steuerungsvorrichtung.

In Fig. 7 ist dargestellt, wie mehrere solcher dezentraler Steuerungsvorrichtungen 400 auf einem vom erfindungsgemässen System zu bearbeitenden Feld angeordnet sein können. Als Beispiel gezeigt sind vier Steuerungsvorrichtungen 400, denen (hier im Beispiel) jeweils eine Drohne 1 zugeordnet ist. Die Steuerungsvorrichtungen 400 stehen mit dem lokalen Rechner 3 in Verbindung. In der Praxis sind natürlich viel mehr Drohnen im Einsatz und gruppenweise den einzelnen dezentralen Steuerungsvorrichtungen zugeordnet. Die steuerungs- und datenmässige Organisation der Vorrichtung entspricht somit derjenigen gemäss Fig. 2.

Die Bearbeitung einer landwirtschaftlichen Fläche mittels des erfindungsgemässen Systems umfasst typischerweise die folgenden Schritte:
Der Anwender bestimmt am lokalen Rechner 3 das gewünschte Einsatzgebiet (Zielfläche). Dieses kann beispielsweise eine zusammenhängende landwirtschaftliche Fläche, aber auch eine Mehrzahl nicht zusammenhängender Teilflächen sein.

Der Anwender bestimmt, welche Aufgabe(n) (z.B. Bekämpfung Schädling A, Bekämpfung Schädling B, Ernte Landwirtschaftsprodukt C, Ernte Landwirtschaftsprodukt D, Bewässerung an einer Stelle X, Aussaat Pflanze E, Bestäubung Pflanze F...) auf dem definierten Einsatzgebiet durchgeführt werden soll.

Der Anwender bestimmt, mit welchen Systemkomponenten (zentrale Steuerungsvorrichtung, dezentrale Steuerungsvorrichtungen, Arten von Drohnen) die Arbeiten ausgeführt werden sollen.

Die Steuerungsvorrichtung(en) wird bzw. werden entweder vom Anwender in das definierte Einsatzgebiet gebracht oder bewegen sich je nach Ausführungsform autonom zu diesem. Alternativ können die Steuerungsvorrichtung(en) auch im oder um das Einsatzgebiet herum ortsfest montiert sein (siehe Fig. 7).

Die zentrale oder dezentral ausgebildete Steuerungsvorrichtung nimmt ihre Arbeit auf und sendet die Drohnen auf den Weg, um die Aufgabe abzuarbeiten. Dabei sendet die Steuerungsvorrichtung die einzelnen Drohnen jeweils in ein Teilgebiet, das dann von den Drohnen mittels derer Sensoren rasterartig auf einen gewünschten landwirtschaftlichen Parameter (z.B. Schädlingsbefall) abgesucht wird. Vorteilhafterweise erfolgt die Auswertung der Sensordaten der Drohnen aber nicht in der Drohne selber (die bedingt durch die möglichst kleine Bauweise nicht über eine entsprechend leistungsstarke Recheneinheit zur Auswertung der Sensordaten verfügt), sondern die Daten werden an die Steuerungsvorrichtung gesendet und dort ausgewertet.

Die Steuerungsvorrichtung wertet die von den Drohnen gesammelten Daten aus, erkennt Bereiche des Arbeitsgebiets (Pflanzengruppen, Pflanzen, Pflanzenteile), die dem gewünschten Parameter entsprechen und behandelt bzw. bearbeitet werden müssen, und sendet ausgewählten Drohnen die Instruktionen, die Aufgabe auszuführen.

Die entsprechend instruierten Drohnen bewegen sich zum ihnen zugewiesenen Ziel und bearbeiten dieses. Dies kann je nach Aufgabe beispielsweise die punktuelle Bekämpfung von Schädlingen mit einem eingebauten Lasergerät oder anderem entsprechend geeigneten Werkzeug, die gezielte Ernte einzelner Früchte, oder die Erledigung anderer Aufgaben durch die Drohnen umfassen.

Falls die Akkuladung einzelner Drohnen unter einen bestimmten Wert fällt (definiert durch den Energiebedarf der Aufgabe sowie der Flugdistanz zum Ziel und zurück zu einer Landeplattform), kehren die einzelnen Drohnen zur zentralen Steuerungsvorrichtung oder einer der dezentralen Steuerungsvorrichtungen zurück, landen dort auf deren Landeplattform(en) und lassen sich erneut für einen weiteren Einsatz aufladen.

Andere, noch ausreichend geladene Drohnen setzen die Arbeit der zurückgezogenen Drohnen weiter fort, wo letztere die Arbeit wegen zu geringem Ladungszustand unterbrochen haben.

Vorteilhafterweise ist die Steuerungsvorrichtung so ausgebildet, dass alle zur Verfügung stehenden Drohen so koordiniert werden, dass das definierte Einsatzgebiet optimal und so effizient wie möglich bearbeitet werden kann. So würde in einer ersten «Aufklärungsphase» ein Schwarm bestehend aus einer Vielzahl von Drohnen ausgesendet, wobei jede einzelne Drohne des Schwarms einen definierten Teilbereich des Arbeitsbereichs untersucht. Findet eine Drohne dabei Pflanzen, die bearbeitet werden müssen, so beginnt sie mit der Arbeit. Wird der Arbeitsaufwand dabei als zu gross für eine Drohne erkannt (z.B. flächiger Schädlingsbefall oder «Schädlingsherd» mehrerer Pflanzen, oder auch Ansammlung optimal gereifter Früchte), so beordert die Steuerungsvorrichtung weitere Drohnen zur Unterstützung. Hierbei ist speziell von Vorteil, wenn die Drohnen sehr klein und daher kostengünstig konzipiert sind, was es erlaubt, eine Vielzahl (Dutzende bis Hunderte oder sogar Tausende, also einen ganzen Schwarm) von Drohnen gleichzeitig im Einsatz zu haben, und sich einzelne allfällige Verluste dieser kleinen günstigen Drohnen nicht sonderlich negativ auswirken.

In einer speziellen Ausführung des erfindungsgemässen Systems wird in der (zentralen) Steuerungsvorrichtung mit Ausnahme der Navigationssteuerung auf eine reale Recheneinheit verzichtet und die ganze Datenverarbeitung, Organisation und Befehlsvergabe an die Drohnen erfolgt ausschliesslich über eine virtuelle Steuerung, die als Programm und Datenbankstruktur im Internet bzw. in der Cloud existiert. Hierbei sind die Drohnen so ausgebildet, dass sie ihre Energiespeicher selbstständig laden können (beispielsweise durch Aufsuchen einer bodengestützten Ladeeinrichtung oder vorteilhaft sogar über in der Drohne eingebaute Solarzellen), und lediglich über beispielsweise ein Funk- oder Telefonnetz mit der virtuellen Steuerung verbunden sind und dabei Daten mit dieser austauschen und Befehle von dieser erhalten. In einem solchen Schwarm würde eine Drohne beispielsweise eine Aufgabe zugeteilt bekommen, diese selbstständig (oder unter Steuerung der virtuellen Steuerung) abarbeiten, und bei Bedarf (niedrige Akkuladung) landen, sich aufladen, und die Arbeit nach erfolgter Aufladung selbstständig wieder aufnehmen bzw. eine andere Aufgabe an einer anderen Stelle weiterführen, falls die vorherige Aufgabe während der Aufladung bereits von anderen, entsprechend instruierten Drohnen abgearbeitet und abgeschlossen wurde.

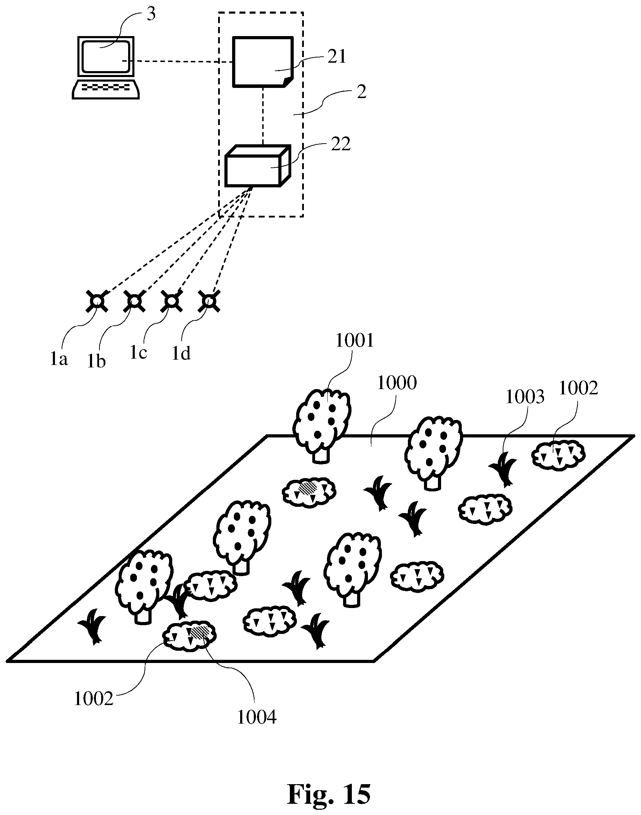

In Fig. 15 ist ein zu bearbeitendes landwirtschaftliches Feld 1000 dargestellt, welches als Mischkultur bewirtschaftet wird. Dabei wachsen durcheinander verschiedene Nutzpflanzen (z.B. Früchte tragende Pflanzen 1001 und 1002) aber auch Unkraut 1003 und Pflanzen (z.B. der Art 1002) mit Schädlingsbefall 1004 auf dem Feld.

In der Nähe des Felds 1000 sind mehrere Drohnen im Ruhemodus gelagert resp. auf einer Landeplattform abgestellt, über Funk verbunden mit einer Kommunikationseinrichtung 22, welche wiederum verbunden ist mit einer virtuellen Internet-/cloudbasierten zentralen Steuereinheit 21, letztere wiederum verbunden mit einem lokalen Rechner 3 im Stützpunkt des Anwenders, so wie im Zusammenhang mit Fig. 1 detailliert erläutert. Zum leichteren Verständnis der folgenden Ausführungen sind die hier dargestellten vier Drohnen mit 1a, 1b, 1c und 1d bezeichnet.

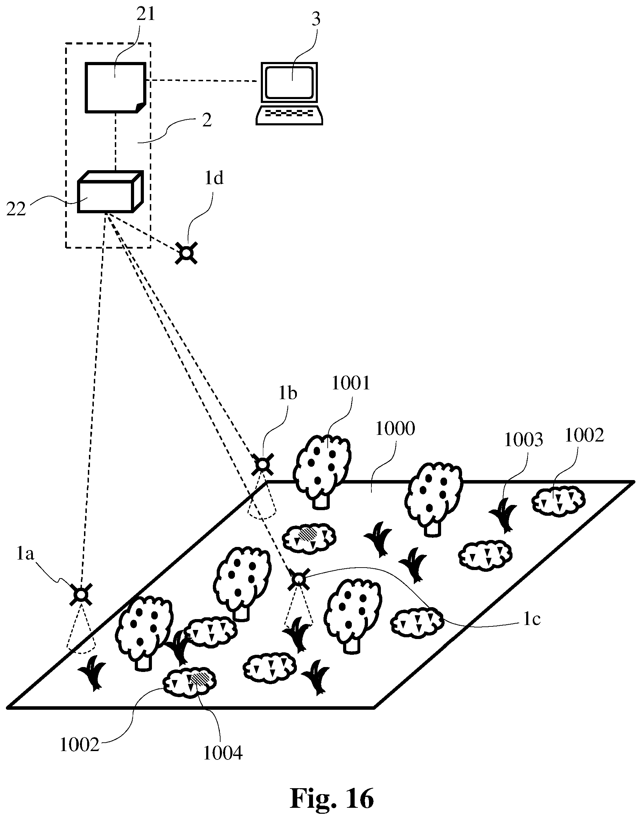

Fig. 16 zeigt das Feld 1000, nachdem einzelne der Drohnen, hier 1a, 1b und 1c, initiiert vom Anwender am lokalen Rechner 3 und über die Kommunikationseinrichtung 22 von der virtuellen Steuereinheit 21 gesteuert ihre Arbeit aufgenommen haben und das ganze Feld nach gewünschten Parametern (Vorhandensein reifer Früchte, Vorhandensein von Schädlingen, ...) absuchen. Eine weitere Drohne 1d verfügt aktuell über eine zu geringe Akkuladung und verbleibt in Ruhezustand, um sich über ihre eingebauten Solarzellen elektrisch aufzuladen.

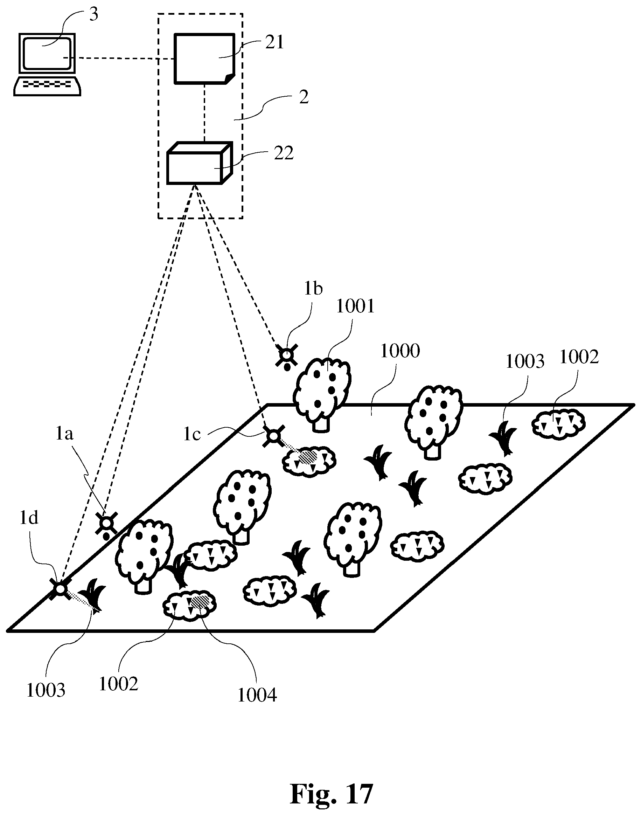

Nachdem der aktuelle Status des Felds 1000 resp. der verschiedenen Nutz- und Schadorganismen 1001, 1002, 1003 und 1004 ermittelt wurde, definiert die Steuereinheit 21 die aktuellen Bedürfnisse, weist darauf basierend den einzelnen Drohnen Aufgaben zu resp. steuert diese zur Erledigung dieser Aufgaben, wie dies in Fig. 17 dargestellt ist. Drohnen 1a und 1b sammeln reife Früchte von Pflanzen der Art 1001, während Drohne 1c erkannten Schädlingsbefall auf Pflanzenart 1002 mittels Laser bekämpft. Die vorher noch aufladende Drohne 7d ist nun auch aufgeladen und einsatzbereit, ihr wurde die Bekämpfung der Unkrautart 1003 aufgetragen, was sie ebenfalls durch Lasereinsatz erfüllt.

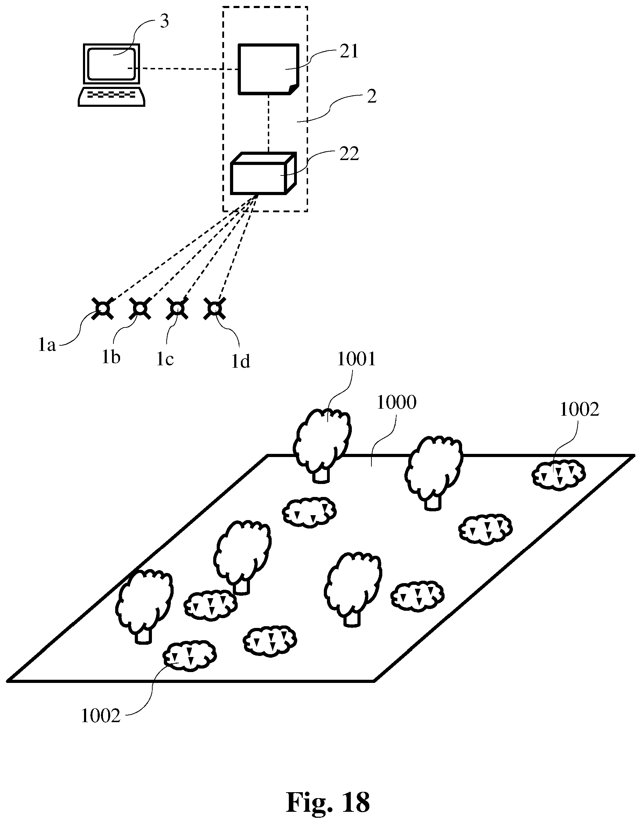

Fig. 18 stellt nun den Zustand des Mischkultur-Felds 1000 nach erfolgter Bearbeitung dar. Der Schädlingsbefall 1004 auf den Pflanzen der Art 1002 wurde erfolgreich bekämpft und die reifen Früchte der Art 1001 wurden geerntet. Die Drohnen 1a bis 1d sind abseits des Feldes (z.B. auf einer Landeplattform) gelandet, befinden sich im Ruhezustand und laden sich mittels ihrer Solarzellen auf. In einer weiteren Arbeitsrunde würde sich das Scannen des Feldes nun wiederholen und es würde zwecks möglichst frühzeitiger Erkennung erneut auf ein Wiederauftreten resp. erneute Ausbreitung der Schädlinge geachtet, sowie die Früchte der Art 1002 auf ihren Reifegrad überprüft und anschliessend entsprechend bearbeitet.

## Patentansprüche

1. System zur Schädlingsbekämpfung an in einer landwirtschaftlichen Fläche befindlichen Pflanzen, mit
- einem Schwarm von Drohnen (1), die dazu ausgebildet sind, selbständig Pflanzen anzufliegen, und jeweils mit einem Sensor (125) zur Erkennung von Schädlingsbefall ausgestattet sind, und
- einer Steuerungsvorrichtung (2; 2'; 200; 300; 400) zur Steuerung der Drohnen (1), wobei die Steuerungsvorrichtung (2; 2'; 200; 300; 400) und die Drohnen (1) mit Kommunikationseinrichtungen (12, 22; 22') zum gegenseitigen Datenaustausch ausgestattet sind, **dadurch gekennzeichnet, dass** die Drohnen (1) eine maximale Grösse von 25 cm aufweisen und mit einem für die Schädlingsbekämpfung geeigneten Lasergerät (127) ausgestattet und dazu ausgebildet sind, erkannten Schädlingsbefall mittels des Lasergeräts (127) gezielt zu bekämpfen.

2. System nach Anspruch 1, **dadurch gekennzeichnet, dass** das Lasergerät (127) über eine automatisch einstellbare Optik verfügt, mittels welcher der Brennpunkt einstellbar ist.

3. System nach Anspruch 1 oder 2, **dadurch gekennzeichnet, dass** die Steuerungsvorrichtung (2; 2'; 200; 300; 400) dazu ausgebildet ist, eine zu bearbeitende landwirtschaftliche Zielfläche (1000) festzulegen und den Drohnen (1) zu kommunizieren, wobei die Drohnen (1) dazu ausgebildet sind, Pflanzen innerhalb der festgelegten Zielfläche (1000) anzufliegen.

4. System nach einem der Ansprüche 1 bis 3, **dadurch gekennzeichnet, dass** die Drohnen (1) dazu ausgebildet sind, direkt oder über die Steuerungsvorrichtung (2; 2'; 200; 300; 400) untereinander zu kommunizieren.

5. System nach einem der Ansprüche 1 bis 4, **dadurch gekennzeichnet, dass** die Drohnen (1) dazu ausgebildet sind, von ihren Sensoren (125) erfasste Daten an die Steuerungsvorrichtung (2; 2'; 200; 300; 400) zu übermitteln, und dass die Steuerungsvorrichtung (2; 2'; 200; 300; 400) dazu ausgebildet ist, von den Drohnen (1) übermittelte Daten zu analysieren und daraus folgend Steuerungsinformationen an die Drohnen (1) zu übermitteln.

6. System nach einem der Ansprüche 1 bis 5, **dadurch gekennzeichnet, dass** die Drohnen (1) ein maximales Abfluggewicht von 500 g aufweisen.

7. System nach einem der Ansprüche 1 bis 6, **dadurch gekennzeichnet, dass** die Drohnen (1) mit einer Positionsbestimmungseinrichtung (126) ausgestattet sind.

8. System nach einem der Ansprüche 1 bis 7, **dadurch gekennzeichnet, dass** die Drohnen (1) eine Ausrichtanordnung (128) zur Ausrichtung des Lasergeräts (127) auf ein Zielobjekt aufweisen.

9. System nach einem der Ansprüche 1 bis 8, **dadurch gekennzeichnet, dass** die Drohnen (1) mit einem elektrischen Energiespeicher (124) ausgestattet sind, dass das System mindestens eine Ladeeinrichtung (202; 302; 402) für den Energiespeicher (124) der Drohnen (1) aufweist, und dass die Drohnen (1) dazu ausgebildet sind, bei Ladebedarf ihres Energiespeichers (124) ihre Tätigkeit zu unterbrechen, die mindestens eine Ladeeinrichtung (202; 302; 402) autonom anzufliegen, ihren Energiespeicher (124) aufzuladen und ihre Tätigkeit nach dem Aufladen ihres Energiespeichers (124) automatisch wieder aufzunehmen.

10. System nach Anspruch 9, **dadurch gekennzeichnet, dass** es mindestens eine Landeplattform (203; 303; 403) für die Drohnen (1) aufweist, dass die Landeplattform (203; 303; 403) mehreren Drohnen (1) Platz bietet und dass die mindestens eine Ladeeinrichtung (202; 302; 402) in die Landeplattform (203; 303; 403) integriert ist.

11. System nach Anspruch 10, **dadurch gekennzeichnet, dass** die Landeplattform (203; 303; 403) einen elektrischen Ladeenergiespeicher (23; 23') zur Energieversorgung der mindestens einen Ladeeinrichtung (202; 302; 402) aufweist.

12. System nach Anspruch 11, **dadurch gekennzeichnet, dass** die Landeplattform (203; 303; 403) ein Photovoltaik-Panel aufweist oder selbst als Photovoltaik-Panel ausgebildet ist und der Ladeenergiespeicher (23; 23') mittels des Photovoltaik-Panels aufladbar ist.

13. System nach einem der Ansprüche 10 bis 12, **dadurch gekennzeichnet, dass** die Landeplattform (303) mobil ausgebildet ist.

14. System nach Anspruch 13, **dadurch gekennzeichnet, dass** die Landeplattform (303) selbstfahrend ausgebildet ist.

15. System nach einem der Ansprüche 1 bis 14, **dadurch gekennzeichnet, dass** mindestens einige Funktionalitäten der Steuerungsvorrichtung (2) als auf einem Server im Internet bereitgestellte Software implementiert sind.

## Claims

1. System for controlling pests on plants that are located in an agricultural area, having
- a swarm of drones (1) which are configured to fly to plants autonomously and are each equipped with a sensor (125) for detecting pest infestation, and
- a control device (2; 2'; 200; 300; 400) for controlling the drones (1), wherein the control device (2; 2'; 200; 300; 400) and the drones (1) are equipped with communication devices (12, 22; 22') for mutual exchange of data, **characterised in that** the drones (1) have a maximum size of 25 cm and are equipped with a laser device (127) suitable for pest control and are configured to effect targeted control of detected pest infestation by means of the laser device (127).

2. System according to claim 1, **characterised in that** the laser device (127) has an automatically adjustable optical system by means of which the focal point is adjustable.

3. System according to claim 1 or 2, **characterised in that** the control device (2; 2'; 200; 300; 400) is configured to define an agricultural target area (1000) to be treated and to communicate that area to the drones (1), the drones (1) being configured to fly to plants within the defined target area (1000).

4. System according to any one of claims 1 to 3, **characterised in that** the drones (1) are configured to communicate with one another directly or via the control device (2; 2'; 200; 300; 400).

5. System according to any one of claims 1 to 4, **characterised in that** the drones (1) are configured to transmit data captured by their sensors (125) to the control device (2; 2'; 200; 300; 400); and the control device (2; 2'; 200; 300; 400) is configured to analyse data transmitted by the drones (1) and consequently transmit control information to the drones (1).

6. System according to any one of claims 1 to 5, **characterised in that** the drones (1) have a maximum take-off weight of 500 g.

7. System according to any one of claims 1 to 6, **characterised in that** the drones (1) are equipped with a position determination device (126).

8. System according to any one of claims 1 to 7, **characterised in that** the drones (1) have an orientation arrangement (128) for orienting the laser device (127) with respect to a target object.

9. System according to any one of claims 1 to 8, **characterised in that** the drones (1) are equipped with an electrical energy storage means (124); the system has at least one charging device (202; 302; 402) for the energy storage means (124) of the drones (1); and in the event of their energy storage means (124) requiring charging, the drones (1) are configured to discontinue their activity, autonomously fly to the at least one charging device (202; 302; 402), charge their energy storage means (124) and resume their activity automatically once their energy storage means (124) has been charged.

10. System according to claim 9, **characterised in that** it has at least one landing platform (203; 303; 403) for the drones (1); the landing platform (203; 303; 403) offers space for a plurality of drones (1); and the at least one charging device (202; 302; 402) is integrated in the landing platform (203; 303; 403).

11. System according to claim 10, **characterised in that** the landing platform (203; 303; 403) has an electrical charging energy storage means (23; 23') for supplying energy to the at least one charging device (202; 302; 402).

12. System according to claim 11, **characterised in that** the landing platform (203; 303; 403) has a photovoltaic panel or is itself configured as a photovoltaic panel and the charging energy storage means (23; 23') is chargeable by means of the photovoltaic panel.

13. System according to any one of claims 10 to 12, **characterised in that** the landing platform (303) is mobile.

14. System according to claim 13, **characterised in that** the landing platform (303) is self-propelling.

15. System according to any one of claims 1 to 14, **characterised in that** at least some functionalities of the control device (2) are implemented as software provided on a server in the internet.

## Revendications

1. Système de lutte contre les parasites sur des plantes se trouvant dans une surface agricole, comprenant
- un essaim de drones (1) qui sont conçus pour voler automatiquement vers des plantes et sont chacun équipés d'un capteur (125) pour la détection d'infestations de parasites, et
- un dispositif de commande (2 ; 2' ; 200 ; 300 ; 400) destiné à commander les drones (1), le dispositif de commande (2 ; 2' ; 200 ; 300 ; 400) et les drones (1) étant équipés de dispositifs de communication (12, 22 ; 22') en vue de l'échange de données réciproque, **caractérisé en ce que** les drones (1) présentent une taille maximale de 25 cm et sont équipés d'un appareil laser (127) adapté à la lutte contre les parasites et sont conçus pour lutter de manière ciblée contre une infestation de parasites, au moyen de l'appareil laser (127).

2. Système selon la revendication 1, **caractérisé en ce que** l'appareil laser (127) dispose d'une optique à réglage automatique qui permet de régler le foyer.

3. Système selon la revendication 1 ou 2, **caractérisé en ce que** le dispositif de commande (2 ; 2' ; 200 ; 300 ; 400) est conçu pour définir une surface cible agricole (1000) devant être traitée, et pour la communiquer aux drones (1), les drones (1) étant conçus pour voler vers des plantes à l'intérieur de la surface cible (1000) définie.

4. Système selon une des revendications 1 à 3, **caractérisé en ce que** les drones (1) sont conçus pour communiquer directement entre eux ou par l'intermédiaire du dispositif de commande (2 ; 2' ; 200 ; 300 ; 400).

5. Système selon une des revendications 1 à 4, **caractérisé en ce que** les drones (1) sont conçus pour transmettre au dispositif de commande (2 ; 2' ; 200 ; 300 ; 400) les données recueillies par leurs capteurs (125), et **en ce que** le dispositif de commande (2 ; 2' ; 200 ; 300 ; 400) est conçu pour analyser les données transmises par les drones (1) et pour transmettre, à partir de cette analyse, des informations de commande aux drones (1).

6. Système selon une des revendications 1 à 5, **caractérisé en ce que** les drones (1) ont un poids au décollage maximal de 500 g.

7. Système selon une des revendications 1 à 6, **caractérisé en ce que** les drones (1) sont équipés d'un dispositif de localisation (126).

8. Système selon une des revendications 1 à 7, **caractérisé en ce que** les drones (1) présentent un moyen d'alignement (128) destiné à aligner l'appareil laser (127) sur un objet cible.

9. Système selon une des revendications 1 à 8, **caractérisé en ce que** les drones (1) sont équipés d'un accumulateur d'énergie électrique (124), **en ce que** le système présente au moins un dispositif de charge (202 ; 302 ; 402) pour l'accumulateur d'énergie (124) des drones (1), et **en ce que** les drones (1) sont conçus pour interrompre leur activité en cas de besoin de recharge de leur accumulateur d'énergie (124), pour voler de manière autonome vers le dispositif de charge (202 ; 302 ; 402), au nombre d'au moins un, pour recharger leur accumulateur d'énergie (124) et pour reprendre leur activité de manière automatique après la recharge de leur accumulateur d'énergie (124).

10. Système selon la revendication 9, **caractérisé en ce qu'**il comprend au moins une plateforme d'atterrissage (203 ; 303 ; 403) pour les drones (1), **en ce que** la plateforme d'atterrissage (203 ; 303 ; 403) offre de la place pour plusieurs drones (1), et **en ce que** le dispositif de charge (202 ; 302 ; 402), au nombre d'au moins un, est intégré dans la plateforme d'atterrissage (203 ; 303 ; 403).

11. Système selon la revendication 10, **caractérisé en ce que** la plateforme d'atterrissage (203 ; 303 ; 403) comprend un accumulateur d'énergie de charge (23 ; 23') électrique destiné à l'alimentation en énergie du dispositif de charge (202 ; 302 ; 402), au nombre d'au moins un.

12. Système selon la revendication 11, **caractérisé en ce que** la plateforme d'atterrissage (203 ; 303 ; 403) comprend un panneau photovoltaïque ou est elle-même réalisée comme panneau photovoltaïque, et l'accumulateur d'énergie de charge (23 ; 23') peut être chargé l'aide du panneau photovoltaïque.

13. Système selon une des revendications 10 à 12, **caractérisé en ce que** la plateforme d'atterrissage (303) est réalisée sous une forme mobile.

14. Système selon la revendication 13, **caractérisé en ce que** la plateforme d'atterrissage (303) est réalisée sous une forme automotrice.

15. Système selon une des revendications 1 à 14, **caractérisé en ce qu'**au moins quelques fonctionnalités du dispositif de commande (2) sont mises en œuvre sous forme de logiciel mis à disposition sur un serveur dans l'internet.
